# FASCICULE DE BREVET EUROPEEN

(11) **EP 2 181 039 B1**
(45) Date de publication et mention de la délivrance du brevet: **16.03.2011**
(21) Numéro de dépôt: 08805631.2
(22) Date de dépôt: 02.06.2008
(51) Int. Cl.: B64D 29/08, F02K 1/76

(54) **DISPOSITIF ET PROCEDE DE COMMANDE DE L'ALIMENTATION D'AU MOINS UN ACTIONNEUR DE MAINTENANCE D'UN AERONEF**
VORRICHTUNG UND VERFAHREN ZUR STROMZUFUHRSTEUERUNG MINDESTENS EINES FLUGZEUGWARTUNGSAKTUATORS
DEVICE AND METHOD FOR CONTROLLING THE POWER SUPPLY OF AT LEAST ONE AIRCRAFT MAINTENANCE ACTUATOR

(30) Priorité: 20.08.2007 FR 0705929
(43) Date de publication de la demande: 05.05.2010
(73) Titulaire: Aircelle, 76700 Gonfreville L'Orcher (FR)
(72) Inventeur: PEREIRA, David, F-91470 Limours (FR)
(74) Mandataire: Maureau, Philippe
(86) Numéro de dépôt international: PCT/FR2008/000742
(87) Numéro de publication internationale: WO 2009/024656

(56) Documents cités:
- WO-A-2006/134253
- US-B1- 6 439 504
- US-B1- 6 622 963

## Description

L'invention se rapporte à un procédé et à un dispositif de commande de l'alimentation d'au moins un actionneur de maintenance d'un aéronef ainsi qu'à une nacelle de turboréacteur d'un aéronef comprenant un tel dispositif.

Un aéronef est mu par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseurs de poussée.

Une nacelle présente généralement une structure tubulaire comprenant une entrée d'air en avant du turboréacteur, une section médiane destinée à entourer une soufflante du turboréacteur, une section arrière destinée à canaliser le flux d'air secondaire du turboréacteur et pouvant abriter des moyens d'inversion de poussée, et est généralement terminée par une tuyère d'éjection dont la sortie est située en aval du turboréacteur.

Les nacelles modernes sont souvent destinées à abriter un turboréacteur double flux apte à générer par l'intermédiaire des pales de la soufflante en rotation un flux d'air froid secondaire qui s'additionne au flux primaire de gaz chauds issus de la turbine du turboréacteur.

Une nacelle présente généralement une structure externe, dite Outer Fixed Structure (OFS), qui définit, avec une structure interne concentrique dite Inner Fixed Structure (IFS) comportant un capot entourant la structure du turboréacteur proprement dite en arrière de la soufflante, un canal annulaire d'écoulement, encore appelé veine, visant à canaliser un flux d'air froid, dit secondaire, qui circule à l'extérieur du turboréacteur. Les flux primaire et secondaire sont éjectés du turboréacteur par l'arrière de la nacelle.

Chaque ensemble propulsif de l'avion est ainsi formé par une nacelle et un turboréacteur, et est suspendu à une structure fixe de l'avion, par exemple sous une aile ou sur le fuselage, par l'intermédiaire d'un pylône ou mât rattaché au turboréacteur ou à la nacelle.

La nacelle comprend au moins une paire de capots usuellement formés de deux demi-coquilles de forme sensiblement hémicylindrique, de part et d'autre d'un plan vertical longitudinal de symétrie de la nacelle, et montées mobiles de manière à pouvoir se déployer entre une position de travail et une position de maintenance en vue de donner accès au turboréacteur.

Les deux capots sont généralement montés pivotants autour d'un axe longitudinal formant charnière en partie supérieure (à 12 heures) de l'inverseur. Les capots sont maintenus en position de fermeture au moyen de verrous disposés le long d'une ligne de jonction située en partie inférieure (à 6 heures).

La nacelle peut comprendre par exemple une paire de capots de soufflante, destinés à couvrir la partie soufflante du turboréacteur, et une paire de capots d'inverseur, comprenant un inverseur de poussée et couvrant la partie arrière du turboréacteur.

Chaque capot est ouvert à l'aide d'au moins un actionneur, par exemple un vérin, et est maintenu ouvert à l'aide d'au moins une bielle, l'actionneur et la bielle présentant chacun une première extrémité fixée généralement sur le turboréacteur et une seconde extrémité fixée sur le capot.

De façon connue, les actionneurs peuvent être réalisés sous forme d'actionneurs hydrauliques.

Il est également connu d'utiliser des actionneurs électromécaniques pour déplacer certaines parties de la nacelle, comme les capots d'inverseurs de poussée, ainsi que le présente le document EP0843089.

Les actionneurs sont commandés par un boîtier de commande à disposition d'un utilisateur, le boîtier de commande comprenant au moins un bouton de commande de l'actionneur, comme dans le document US 6 622 963.

Le réseau électrique de maintenance qui alimente les actionneurs de maintenance est mis sous tension en général lorsque l'aéronef est désactivé, c'est-à-dire lorsque l'aéronef est au sol, lorsque le moteur est arrêté et qu'aucun feu n'est détecté à bord.

Il est possible que l'un des boutons de commande d'un boîtier de commande soit resté enfoncé, par exemple pour cause de grippage.

Dans ces conditions, il existe un risque de déploiement de l'actionneur en vue de l'ouverture d'un capot dès la mise sous tension du réseau électrique de maintenance ce qui peut occasionner des dégradations prématurées des moteurs et de l'électronique des actionneurs si le capot est verrouillé. Ce déploiement peut également menacer la sécurité du personnel en occasionnant un déplacement brusque du capot au déverrouillage de celui-ci. De plus, le déploiement de l'actionneur est réalisé sans avoir été commandé.

Il est à noter que ce risque de déploiement est également présent pour d'autres types d'actionneurs de maintenance d'un aéronef, distincts des actionneurs de capots de nacelle.

La présente invention a pour but d'éviter le déploiement non commandé par l'utilisateur d'un actionneur de maintenance dès la mise sous tension du réseau électrique de maintenance.

A cet effet, la présente invention a pour objet un dispositif de commande de l'alimentation d'au moins un actionneur de maintenance d'un aéronef à partir d'un réseau d'alimentation électrique de l'aéronef comprenant :
- des moyens de commande de l'alimentation électrique d'au moins un actionneur de maintenance,
- des moyens de mise en communication des moyens de commande avec au moins un boîtier de commande permettant à un utilisateur de commander le fonctionnement d'au moins un actionneur,
   caractérisé en ce que
   les moyens de commande sont agencés pour comparer l'état d'au moins un boîtier de commande avec au moins un état de référence et/ou un état anormal pour la mise sous tension, et à bloquer l'activation de l'actionneur si l'état du boîtier de commande est différent d'un état de référence ou correspond à un état anormal lors de la mise sous tension du réseau d'alimentation.

Grâce aux dispositions selon l'invention, le fonctionnement de l'actionneur électrique est inhibé lorsque le boîtier de commande n'est pas dans un état normal de référence lors de la mise sous tension.

Ces dispositions permettent notamment de détecter un bouton de boîtier de commande resté enfoncé, par exemple pour cause de grippage, et d'éviter que celui-ci ne provoque un déplacement de l'actionneur non commandé par l'utilisateur.

Une sécurisation de l'utilisation des actionneurs est ainsi obtenue.

Avantageusement, les moyens de commande sont agencés pour autoriser l'activation de l'actionneur lorsque l'état du boîtier de commande est modifié pour revenir à un état de référence pour la mise sous tension.

Selon un mode de réalisation, le ou les états de référence correspondent à des états du boîtier dans lesquels aucun mouvement de l'actionneur n'est commandé.

La présente invention concerne également une nacelle de turboréacteur d'un aéronef comprenant au moins un actionneur de maintenance, un boîtier de commande et un dispositif tel que décrit ci-dessus.

Selon une possibilité, le dispositif est disposé dans un boîtier d'alimentation et de surveillance des actionneurs.

Selon une autre possibilité, le dispositif est disposé sur l'actionneur.

La présente invention a également pour objet un procédé de commande de l'alimentation d'au moins un actionneur de maintenance d'un aéronef à partir d'un réseau d'alimentation électrique de l'aéronef comprenant lors de la mise sous tension du réseau d'alimentation une étape consistant à comparer l'état d'au moins un boîtier de commande avec au moins un état de référence et/ou un état anormal pour la mise sous tension, et à bloquer l'activation de l'actionneur si l'état du boîtier de commande est différent d'un état de référence ou correspond à un état anormal.

De toute façon, l'invention sera bien comprise à l'aide de la description qui suit, en référence au dessin schématique annexé représentant, à titre d'exemple non limitatif, une forme d'exécution de ce dispositif.
La figure 1 est une vue générale schématique en perspective d'une nacelle et d'un turboréacteur vus du dessous, les capots de soufflante et d'inverseur étant ouverts.
La figure 2 est une de face de la nacelle et du turboréacteur de figure 1.
La figure 3 est une représentation schématique d'un dispositif selon l'invention.
La figure 4 représente schématiquement un état de référence d'un boîtier de commande lors de la mise sous tension du réseau d'alimentation.
Les figures 5a à 5c représentent schématiquement des états anormaux du boîtier de commande lors de la mise sous tension du réseau d'alimentation.

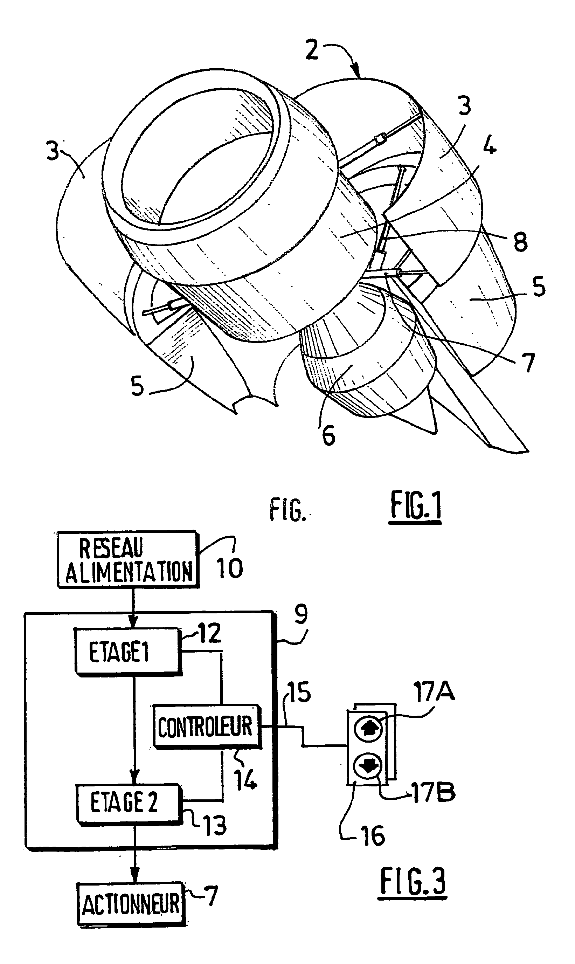

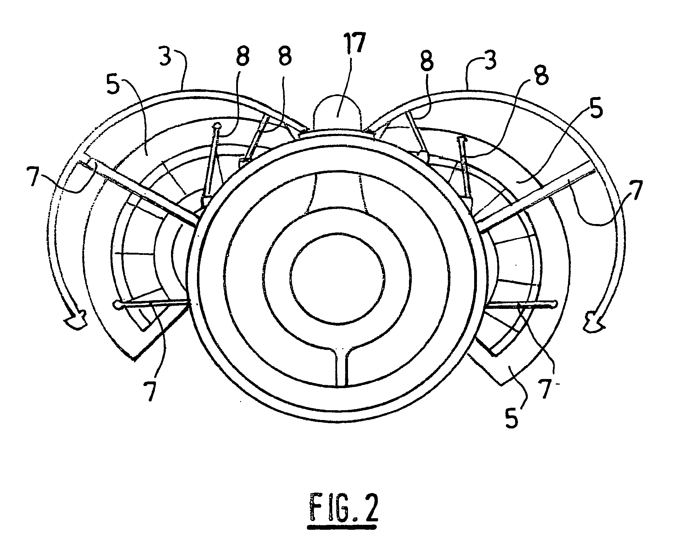

Comme représenté sur les figures 1 et 2, une nacelle d'aéronef 2 comporte de façon connue, comme décrit précédemment, une paire de capots 3 de soufflante, destinés à couvrir la partie soufflante du turboréacteur 4, et une paire de capots d'inverseur 5, comprenant un inverseur de poussée et couvrant la partie arrière 6 du turboréacteur.

Ces capots 3, 4 sont entraînés en mouvement entre leur position de fermeture et d'ouverture par un actionneur constitué par exemple par un vérin électromécanique 7 et maintenus en position ouverte par une bielle 8, comme cela est visible notamment sur la figure 2.

Selon l'invention, la nacelle comprend un dispositif de commande 9 de l'alimentation des actionneurs de maintenance 7 à partir d'un réseau d'alimentation électrique de maintenance représenté schématiquement sur la figure 3.

Ce dispositif est positionné dans un boîtier d'alimentation et de surveillance des actionneurs.

Le dispositif 9 comprend un premier étage 12 auquel est raccordé un réseau d'alimentation électrique 10 de l'aéronef, qui fournit de façon usuelle une tension alternative triphasée. Ce premier étage 12 comprend en particulier un convertisseur de tension alternative en tension continue, comprenant un redresseur de tension et un composant d'élévation de la tension, par exemple pour fournir une tension continue de 400V.

Le dispositif de commande 12 comprend également un étage de puissance 13 destinés à l'alimentation d'au moins un actionneur de maintenance 7 relié en aval au dispositif. En particulier, le second étage de puissance 13 comprend un convertisseur d'une première tension continue provenant du premier étage vers une seconde tension continue destinée à alimenter un actionneur 7.

Le dispositif comprend en outre des moyens de commande des premiers et second étages 12, 13 constitués par un microcontrôleur 14.

Le microcontrôleur 14 est relié par des moyens de mise en communication 15, par exemple de type filaire avec au moins un boîtier de commande d'actionneur 16 destiné à un utilisateur.

Le microcontrôleur 14 est agencé pour comparer l'état d'au moins un boîtier de commande 16 avec au moins un état de référence pour la mise sous tension, et à bloquer la mise sous tension de l'actionneur si l'état du boîtier de commande est différent d'un état de référence lors de la mise sous tension du réseau d'alimentation.

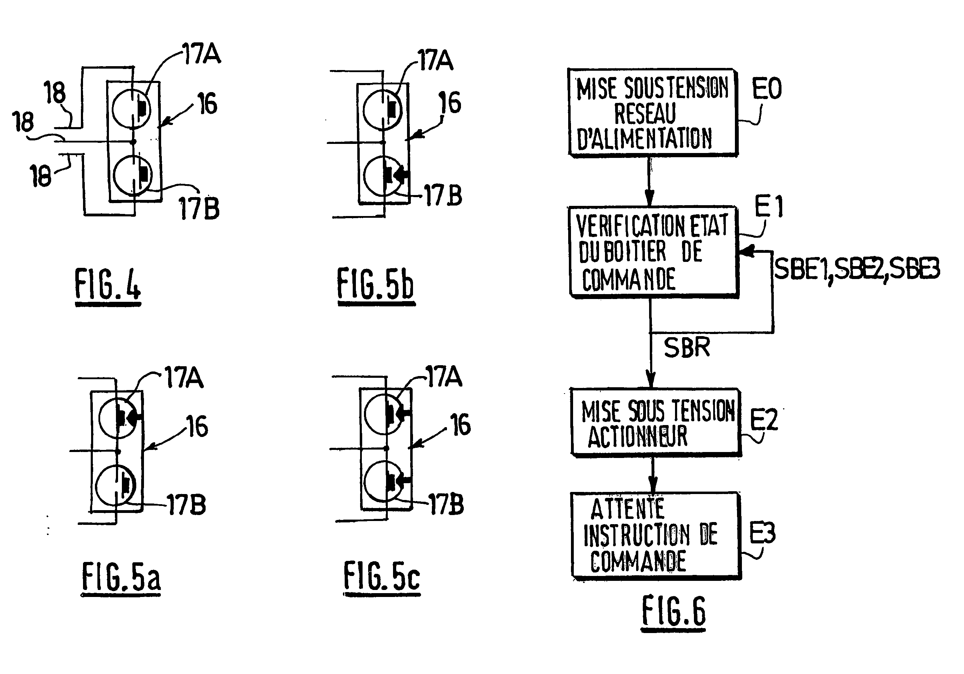

Les figures 4 et 5a à 5c montrent un boîtier de commande 16 dans différents états.

Le boîtier 16 comporte deux boutons de commande 17A et 17B correspondant respectivement à une commande d'ouverture d'un capot 3, 5 entraîné par un actionneur 7 et à une commande de fermeture d'un capot 3, 5 entraîné par l'actionneur.

Ces deux boutons 17A, 17B ferment deux contacts électriques de façon à fournir un signal électrique au microcontrôleur 14 lorsqu'ils sont enfoncés par des lignes électriques 18 constituant le moyen de communication 15.

La figure 4 représente les deux boutons 17A, 17B en position de repos. Aucun bouton n'est enfoncé et en conséquence, aucune commande de mouvement de l'actionneur n'est émise par le boîtier de commande. Cette disposition du boîtier correspond à l'état de référence SBR, pour lequel la mise sous tension de l'actionneur peut être autorisée par le microcontrôleur lors de la mise sous tension du réseau d'alimentation.

Les figures 5a à 5c représentent trois états SBE1, SBE2, SBE3 du boîtier de commande ne correspondant pas à des états de référence, mais à des états anormaux. En particulier, dans l'état SBE1 correspondant à la figure 5a, le bouton d'ouverture du capot 17A est enfoncé, ce qui correspond à l'envoi d'une commande de mouvement de l'actionneur 7 dans une direction provoquant l'ouverture du capot, le bouton de fermeture 17B étant dans sa position de repos.

Dans l'état SBE2 correspondant à la figure 5b, le bouton de fermeture 17B du capot est enfoncé, ce qui correspond à l'envoi d'une commande de mouvement de l'actionneur dans une direction provoquant la fermeture du capot, le bouton d'ouverture 17A étant dans sa position de repos.

Dans l'état SBE3 correspondant à la figure 5c, les boutons de fermeture et d'ouverture 17A et 17B du capot sont enfoncés, ce qui ne correspond pas à une commande cohérente de l'actionneur.

Ainsi, comme représenté sur la figure 6, suite à la mise sous tension du réseau d'alimentation E0 un procédé de commande de l'alimentation mis en oeuvre par le dispositif comprend une première étape E1 consistant à comparer l'état d'au moins un boîtier de commande 16 avec au moins un état de référence SBR pour la mise sous tension.

Si l'état du boîtier de commande correspond à l'état de référence SBR, le microcontrôleur 14 réalise la mise sous tension de l'actionneur dans une seconde étape E2 du procédé, puis attend une instruction de commande en provenance du boîtier de commande 16 dans une troisième étape E3.

Dans le cas contraire, c'est-à-dire si le boîtier de commande 16 est dans l'un des états SBE1, SBE2, SBE3 décrits ci-dessus en référence aux figures 4a à 4c, la mise sous tension de l'actionneur n'est pas autorisée car l'état du boîtier de commande est différent d'un état de référence.

L'étape E1 du procédé est répétée jusqu'à ce que l'état du boîtier de commande soit modifié pour revenir à un état de référence SBR pour la mise sous tension.

Selon une variante, le dispositif est disposé directement sur l'actionneur.

Selon une autre variante, un même dispositif de commande permet de contrôler la mise sous tension de plusieurs actionneurs en vérifiant l'état à la mise sous tension de plusieurs boîtiers de commande.

Comme il va de soi, l'invention ne se limite pas à la seule forme d'exécution du dispositif, décrite ci-dessus à titre d'exemple, mais elle embrasse au contraire toutes les variantes.

Il est à noter en particulier que d'autres types de capots pourraient être commandés par les actionneurs alimentés par le dispositif.

## Revendications

1. Dispositif (9) de commande de l'alimentation d'au moins un actionneur (7) de maintenance d'un aéronef à partir d'un réseau d'alimentation électrique (10) de l'aéronef comprenant :
- des moyens de commande (14) de l'alimentation électrique d'au moins un actionneur de maintenance (7),
- des moyens de mise en communication (15) des moyens de commande (14) avec au moins un boîtier de commande (16) permettant à un utilisateur de commander le fonctionnement d'au moins un actionneur (7),
**caractérisé en ce que**
les moyens de commande (14) sont agencés pour comparer l'état d'au moins un boîtier de commande (16) avec au moins un état de référence (SBR) et/ou un état anormal (SBE1, SBE2, SBE3) pour la mise sous tension, et à bloquer l'activation de l'actionneur si l'état du boîtier de commande (16) est différent d'un état de référence (SBR) ou correspond à un état anormal (SBE1, SBE2, SBE3) lors de la mise sous tension du réseau d'alimentation (10).

2. Dispositif (9) selon la revendication 1, dans lequel les moyens de commande (14) sont agencés pour autoriser l'activation de l'actionneur lorsque l'état du boîtier de commande (16) est modifié pour revenir à un état de référence (SBR) pour la mise sous tension.

3. Dispositif (9) selon l'une des revendications précédentes, dans lequel le ou les états de référence (SBR) correspondent à des états du boîtier dans lesquels aucun mouvement de l'actionneur (7) n'est commandé.

4. Nacelle (2) de turboréacteur d'un aéronef comprenant au moins un actionneur de maintenance (7), un boîtier de commande (16) et un dispositif (9) selon l'une des revendications précédentes.

5. Nacelle (2) selon la revendication 4, dans lequel le dispositif (9) est disposé dans un boîtier (16) d'alimentation et de surveillance des actionneurs (7).

6. Nacelle selon la revendication 4, dans lequel le dispositif (9) est disposé sur l'actionneur (7).

7. Procédé de commande de l'alimentation d'au moins un actionneur de maintenance (7) d'un aéronef à partir d'un réseau d'alimentation électrique (10) de l'aéronef comprenant lors de la mise sous tension du réseau d'alimentation (E0) une étape (E1) consistant à comparer l'état d'au moins un boîtier de commande avec au moins un état de référence (SBR) et/ou un état anormal (SBE1, SBE2, SBE3) pour la mise sous tension, et à bloquer l'activation de l'actionneur (7) si l'état du boîtier de commande (16) est différent d'un état de référence (SBR) ou correspond à un état anormal (SBE1, SBE2, SBE3).

8. Procédé selon la revendication 7, dans lequel l'activation de l'actionneur (7) est autorisée lorsque l'état du boîtier de commande (16) est modifié pour revenir à un état de référence (SBR) pour la mise sous tension.

9. Procédé selon l'une des revendications précédentes 7 ou 8, dans lequel le ou les états de référence (SBR) correspondent à des états du boîtier dans lesquels aucun mouvement de l'actionneur (7) n'est commandé.

## Claims

1. A device (9) for controlling the power supply of at least one aircraft maintenance actuator (7) from an electrical power supply network (10) of the aircraft comprising:
- means (14) for controlling the electrical power supply of at least one maintenance actuator (7),
- means (15) for establishing communication between the control means (14) and at least one control unit (16) allowing a user to control the operation of at least one actuator (7),
**characterized in that**
the control means (14) are designed to compare the state of at least one control unit (16) with at least one reference state (SBR) and/or an abnormal state (SBE1, SBE2, SBE3) for powering up, and to prohibit the activation of the actuator if the state of the control unit (16) is different from a reference state (SBR) or corresponds to an abnormal state (SBE1, SBE2, SBE3) when the power supply network (10) is powered up.

2. The device (9) as claimed in claim 1, wherein the control means (14) are designed to authorize the activation of the actuator when the state of the control unit (16) is modified to return to a reference state (SBR) for powering up.

3. The device (9) as claimed in one of the preceding claims, wherein the reference state or states (SBR) correspond to states of the unit in which no movement of the actuator (7) is ordered.

4. A turbojet engine nacelle (2) of an aircraft comprising at least one maintenance actuator (7), a control unit (16) and a device (9) as claimed in one of the preceding claims.

5. The nacelle (2) as claimed in claim 4, wherein the device (9) is arranged in a unit (16) for powering and monitoring the actuators (7).

6. The nacelle as claimed in claim 4, wherein the device (9) is arranged on the actuator (7).

7. A method of controlling the power supply of at least one aircraft maintenance actuator (7) from an electrical power supply network (10) of the aircraft comprising, when the power supply network is powered up (E0), a step (E1) consisting in comparing the state of at least one control unit with at least one reference state (SBR) and/or an abnormal state (SBE1, SBE2, SBE3) for power-up, and in prohibiting the activation of the actuator (7) if the state of the control unit (16) is different from a reference state (SBR) or corresponds to an abnormal state (SBE1, SBE2, SBE3).

8. The method as claimed in claim 7, wherein the activation of the actuator (7) is authorized when the state of the control unit (16) is modified to return to a reference state (SBR) for power-up.

9. The method as claimed in either of the preceding claims 7 and 8, wherein the reference state or states (SBR) correspond to states of the unit in which no movement of the actuator (7) is ordered.

## Patentansprüche

1. Vorrichtung (9) zur Steuerung der Stromversorgung mindestens eines Wartungsaktuators (7) eines Luftfahrzeugs ab einem Stromversorgungsnetz (10) des Luftfahrzeugs, die umfasst:
- Mittel zur Steuerung (14) der Stromversorgung mindestens eines Wartungsaktuators (7),
- Mittel zur Herstellung von Kommunikation (15) der Steuerungsmittel (14) mit mindestens einem Schaltkasten (16), der es einem Benutzer gestattet, die Arbeit mindestens eines Aktuators (7) zu steuern,
**dadurch gekennzeichnet, dass**
die Steuerungsmittel (14) ausgebildet sind, um den Zustand mindestens eines Schaltkastens (16) mit mindestens einem Referenzzustand (SBR) und/oder einem anormalen Zustand (SBE1, SBE2, SBE3) für das Unterspannungsetzen zu vergleichen und um die Aktivierung des Aktuators zu blockieren, wenn der Zustand des Schaltkastens (16) beim Unterspannungsetzen des Versorgungsnetzes (10) von einem Referenzzustand (SBR) abweicht oder einem anormalen Zustand (SBE1, SBE2, SBE3) entspricht.

2. Vorrichtung (9) nach Anspruch 1, wobei die Steuerungsmittel (14) ausgebildet sind, um die Aktivierung des Aktuators zu genehmigen, wenn der Zustand des Schaltkastens (16) geändert ist, um zu einem Referenzzustand (SBR) für das Unterspannungsetzen zurückzukehren.

3. Vorrichtung (9) nach einem der vorangehenden Ansprüche, wobei der oder die Referenzzustände (SBR) Zuständen des Schaltkastens entsprechen, in denen keine Bewegung des Aktuators (7) befohlen wird.

4. Rumpf (2) eines Turbotriebwerks eines Luftfahrzeugs, der mindestens einen Wartungsaktuator (7), einen Schaltkasten (16) und eine Vorrichtung (9) nach einem der vorangehenden Ansprüche umfasst.

5. Rumpf (2) nach Anspruch 4, wobei die Vorrichtung (9) in einem Schaltkasten (16) zur Versorgung und Überwachung der Aktuatoren (7) angeordnet ist.

6. Rumpf (2) nach Anspruch 4, wobei die Vorrichtung (9) auf dem Aktuator (7) angeordnet ist.

7. Verfahren zur Steuerung der Versorgung mindestens eines Wartungsaktuators (7) eines Luftfahrzeugs ab einem Stromversorgungsnetz (10) des Luftfahrzeugs, das beim Unterspannungsetzen des Versorgungsnetzes (E0) einen Schritt (E1) umfasst, der darin besteht, den Zustand mindestens eines Schaltkastens mit mindestens einem Referenzzustand (SBR) und/oder einem anormalen Zustand (SBE1, SBE2, SBE3) für das Unterspannungsetzen zu vergleichen und die Aktivierung des Aktuators (7) zu blockieren, wenn der Zustand des Schaltkastens (16) von einem Referenzzustand (SBR) abweicht oder einem anormalen Zustand (SBE1, SBE2, SBE3) entspricht.

8. Verfahren nach Anspruch 7, wobei die Aktivierung des Aktuators (7) genehmigt ist, wenn der Zustand des Schaltkastens (16) geändert ist, um zu einem Referenzzustand (SBR) für das Unterspannungsetzen zurückzukehren.

9. Verfahren nach einem der vorangehenden Ansprüche 7 oder 8, wobei der oder die Referenzzustände (SBR) Zuständen des Schaltkastens entsprechen, in denen keine Bewegung des Aktuators (7) befohlen wird.
